## Europäisches Patentamt
## European Patent Office
## Office européen des brevets

(19)

(11) Publication number: **0 026 581**
**B1**

(12)

# EUROPEAN PATENT SPECIFICATION

(45) Date of publication of patent specification: **11.05.83**

(51) Int. Cl.³: **C 04 B 31/34, D 01 D 5/42**

(21) Application number: **80303031.1**

(22) Date of filing: **01.09.80**

(54) Fibrous reinforcement material for water-hardenable masses and method of reinforcing such masses.

(30) Priority: **01.09.79 GB 7930386**

(43) Date of publication of application:
**08.04.81 Bulletin 81/14**

(45) Publication of the grant of the patent:
**11.05.83 Bulletin 83/19**

(84) Designated Contracting States:
**AT BE CH DE FR GB IT LI LU NL SE**

(56) References cited:
**EP - A - 0 006 318**
**EP - A - 0 013 305**
**AU - B - 458 832**
**DE - A - 2 706 433**
**FR - A - 2 389 583**
**GB - A - 1 432 672**

(73) Proprietor: **PLASTICISERS LIMITED**
**Old Mills Drighlington, Nr.**
**Bradford, BD11 1BY Yorkshire (GB)**

(72) Inventor: **Ellis, David Geoffrey**
**2 Lidgett Park Gardens**
**Leeds, LS8 1LL (GB)**

(74) Representative: **Taylor, Phillip Kenneth et al,**
**W.P. THOMPSON & CO. Coopers Building Church**
**Street**
**Liverpool L1 3AB (GB)**

Courier Press, Leamington Spa, England

Fibrous reinforcement material for water-hardenable masses
and method of reinforcing such masses

Description

This invention relates to fibrous reinforcement material suitable for reinforcing water-hardenable masses (such as cement, gypsum and similar inorganic hardenable materials), thermosetting resins (e.g. polyester/styrene, phenolic and epoxy types), paper and inorganic fusible materials. It has been proposed to reinforce cementitious products by using continuous networks produced by fibrillating polypropylene film. The continuous nature of such a network however makes it impossible to mix the network with the water hardenable mass.

GB—A—1,130,612 describes the use of chopped fibrillated coarse twine (of 6,000—65,000 denier) to reinforce water hardenable masses. In this case the specific product is produced by a working of the film (such as by twisting) to produce fibrillation (e.g. as described and claimed in GB—A—1,040,663. The twine is necessarily coarse and does not lend itself to the production of thin (e.g. down to 4 mm thickness) reinforced sheets produced from water-hardenable masses.

If fibrillated films in the form of networks having finer fibrils than those present in the material used in GB—A—1,130,612 were produced and then chopped it would be expected that such finer products would be more useful in and render possible the production of thin sheets of water-hardenable masses.

It has now been found, however, that such finer networks, when chopped in the manner of GB—A—1,130,612 exhibit a balling effect which prevents sufficient fibre being evenly distributed throughout the water-hardenable mass. This balling effect therefore prevents effective reinforcement of the water-hardenable mass by incorporating such fibres.

One method of producing fine fibrillated fibres from oriented polyolefin film, in which the polymer chains have been oriented in the longitudinal direction is to effect a cutting or slitting of the film by rows of pins or cutting edges mounted on a rotating drum as for example described and claimed in GB—A—1,073,741. Such a cutting or slitting process will hereinafter be referred to as mechanical fibrillation.

We have now found that if mechanically fibrillated films are chopped or otherwise broken up into discrete groups of interconnected fibres in which the fibres constituting each group all have a length equal to or less than the length of the slits produced in the film by the mechanical fibrillation then the tendency of the groups to ball together is reduced and sufficient fibre can be evenly distributed throughout the water-hardenable mass to enable a reinforcing action to be achieved even in water-hardenable masses of thin section.

In one embodiment of the present invention therefore there is provided a fibrous reinforcement material which comprises discrete groups of interconnected fibres produced by breaking up the network of fibres formed by mechanical fibrillation of an oriented film of an alkylene polymer and/or copolymer in which substantially all the individual fibres constituting the groups have a length equal to or less than the length of the slits produced in the oriented films by the mechanical fibrillation process.

The film may be in the form of a full width film or may be in the form of tapes which are either cut from unoriented film or are extruded as such. Whether in the form of full width film or in the form of tapes, the film can be cut and if necessary further worked to form discrete groups of interconnected fibres, the fibres constituting the groups being of a length which equals or is less than the length of slit formed in the film by mechanical fibrillation.

The further working may for example be accomplished by the action of mixing of the fibres in the water-hardenable mass. Alternatively or in addition the cut film or tape may be worked by traditional textile fibre handling machinery such as fibre opening machines or carding machines.

It has further been found however, that if the length of the fibres is substantially less than the slit length, the bond between the fibres and the water-hardened mass in which they are incorporated may be too low to provide post-crack flexural strength in the water hardened mass. That is to say, when a crack appears in the water hardened mass, the fibres bridging the crack may exhibit insufficient bonding with the water hardened mass to provide flexural strength in the cracked mass if their length is too short. Furthermore, initial trials showed that increasing the length of the fibres to more than the slit length increased the balling effect to the point where, again, insufficient fibre could be evenly distributed throughout the water hardenable mass to provide post-crack flexural strength.

It has now been found however that if the film which is mechanically fibrillated has a width of 10 mm or less than it can be cut into lengths greater than the said slit length in the film and still enable sufficient fibre to be evenly distributed throughout an aqueous matrix to provide post-crack flexural strength. It has further been found that the presence of the slits in such longer lengths enables penetration of the slits on mixing with the matrix (e.g. cement slurry) to occur which enhances the mechanical bond between the tape and the matrix. Suitable film widths have been found to be from 0.5 to 10 mm. The increase in the length of individual pieces of the chopped film which is possible, i.e. enable posy-crack flexural strength to be achieved varies with the width of the tape.

Thus for a 0.5 mm tape lengths of up to 100 mm are just possible although shorter pieces of 35 mm or less are preferred. As the width of the tape increases the possible length decreases and at 10 mm the length should not in general exceed 20 mm. The relationship between the width of tape and possible cut length is not linear.

According to a further and preferred embodiment of the present invention there is provided a fibrous reinforcement material which comprises cut or chopped pieces of mechanically fibrillated oriented film formed from an alkylene polymer and/or copolymer, the width of the film (measured before fibrillation) being from 0.5 mm to 10 mm and the length of substantially all the cut or chopped pieces being 100 mm or less and, for a given width of film, being such as to provide post-crack flexural strength in a water hardened mass in which said cut pieces are incorporated before the mass is hardened.

Preferably the length of the cut pieces does not exceed 35 mm. When the width of the tape is 0.5 mm the most preferred length of the cut pieces is from 20 to 26 mm and at a width of 1.5 mm the most preferred length is from 15 mm to 20 mm. When the width is about 10 mm the most preferred length is from 6 mm to 12 mm. The thickness of the oriented film may be from 10 to 100 $\mu$m but thicknesses of from 25 to 40 $\mu$m are preferred for ease of handling consistent with good reinforcing properties.

It has been found that as the length of the cut pieces increases beyond the slit length so does the area of contact with the water-hardened mass and also the number of slits in the film into which the water-hardenable mass can penetrate before it is hardened. In this way increasing the length increases the mechanical bond between the fibres of the cut or chopped piece and the water-hardened mass. The limiting factor for length in respect of a given width is the increase in the balling effect which occurs as the length is increased.

In a more general aspect the present invention provides a fibrous reinforcement material which comprises discrete groups of interconnected fibres produced from a mechanically fibrillated oriented film or tape of an alkylene polymer and/or copolymer in which the length of substantially all the fibres constituting each such group is not more than 100 mm and for a given width of film or tape, is such as to provide post-crack flexural strength of a water-hardened mass in which such groups have been evenly distributed before the mass is hardened. When the width of film or tape before fibrillation is greater than 10 mm, then, as hereinbefore indicated, the length of the individual fibres making up the group must be less than or equal to the slit length produced by the mechanical fibrillation. When the width of film or tape before mechanical fibrillation is less than 10 mm, then, the length of the fibres may be and are preferably longer than the said slit length so as to constitute discrete lengths of film or tape having a plurality of slits formed therein.

The fibrous reinforcement material of the invention are suitable for mixing directly in the specific matrix of the water-hardenable mass, for example the thin reinforced cement sheet. The types of sheet product which normally use asbestos fibres are envisaged as particularly important applications of the reinforcing material of the invention. The mixing in of the reinforcement material can be undertaken on known machinery (e.g. Hatschek machine).

Fibrillation parameters such as fibrillator speed and depth can be varied to give rise to more or less hairy, ragard fibres. The incorporation of fillers such as inorganic fillers or of other promotors of micro fibrillation such as general purpose styrene in the film can also promote this hairiness enhances workability, i.e. the ability of the reinforcement material to pick up and carry with it some of the water hardenable mass (e.g. a cement slurry). On the other hand the presence of hairiness increases the tendency for the balling effect to occur. In practice the degree of hairiness introduced should be chosen such as to enhance workability whilst not increasing the balling effect to the point where even distribution of sufficient reinforcement material is prevented.

The fibre bonding properties with the matrix formed from water and the water-hardenable mass, the wettability, dispersibility and "workability" (i.e. the ability of the groups of interconnected fibres to be wetted by, introduced into, and then carry with them some of the matrix) can be improved by inclusion in the polymer melt from which the films to be fibrillated are formed of:

(a) Inorganic particles compatible with the matrix and compatible with the polymer and processing conditions e.g. ordinary portland cement, chalk, silica (precipitated or aerogel types), alumina, magnesia and other naturally occurring oxides and carbonates.

(b) Organic coupling or bonding agents e.g. ethyl polysilicates and methacryloxypropyltrimethoxysilane types, styrene-acrylonitrile copolymer, silicone-glycol copolymer and polyvinylalcohol, and organic acids e.g. phthalic anhydride, oleic acid.

Chemical treatments of the surface of the fibres (applied to fibrillated tow before cutting and breaking) can also assist incorporation and dispersion of the groups in the matrix to be reinforced. These may be typical surfactant types of finishes which impart hydrophillic properties e.g. lauric fatty acid, ethoxylated fatty acid types and phosphate esters.

The bond between the fibres constituting the cut pieces and the water-hardenable mass is responsible for assisting transfer of applied loads from the said mass to be fibres on first cracking of the mass under stress. To minimise crack widths, it is preferred that fibrils of high Young's modulus be used. This may be achieved at commercially viable outputs by suitable choice of conditions and parameters during production of the alkylene film and its subsequent orientation.

The fibrous reinforcing material of the present invention may be produced from blown film or cast film (in water or into a temperature controlled polished metal roller). It is possible to obtain a high Young's modulus if the film is cast or preheated at a high temperature (e.g. 80—120°C) before subsequent stretching, and orientation of polymer chains. Thus in the case of cast films, raising the temperature of the polished roller from 60 to 90°C makes it possible to increase the stretching or draw ratio from 17.5 to 28.

The desired width of film may be produced from the blown or cast film by slitting the film longitudinally into a plurality of tapes before mechanical fibrillation. After fibrillation the fibrillated tapes may be collected by winding on to a package as they are produced and transported as such. They can be cut or chopped immediately before being incorporated in the water-hardenable mass as by spraying into the aqueous matrix width agitation. Alternatively, the fibrillated tapes may be cut in line on the tape production line to the required length and supplied in bulk to a board plant and metered as chopped fibrillated tape into an aqueous matrix such as a cement slurry in a board making plant.

The speed of the fibrillator roller with respect to the oriented film can be adjusted in a known manner to impose a further slitting of the network produced by the stagger of the rows of pins thus producing even finer fibres.

When very narrow tapes (for example of widths 0.5, 1.5, 3.0, 3.5 mm) are mechanically fibrillated, unless the fibrillator speed is very fast it is essential that the pins or cutting edges of the fibrillator are spaced to run and ensure slitting of the tape by at least two adjacent pins or cutting edges in the same width of tape (e.g. 2.4 pins/mm will give at normal fibrillators speed only one slit/unit width for 0.5 mm wide tapes, whereas 1.6 pins/mm will ensure at least 2 slits/unit width of a 1.5 mm wide tape). For one pin or cutting edge per width of tape, the tape can be easily deflected and so avoid being slit.

The spacing of pins in each row thereof on the fibrillator roller may be, for example 0.6, 1.6, or 2.4 or 3.0 pins/mm. At 3.0 pins/mm the spacing gives fibre of 333 $\mu$m maximum width. The stagger between consecutive rows of pins on the pinned roller may be varied for example from 0.05 to 0.33 mm (the latter width being limited by the pins/mm) which provide fine interconnecting fibres with widths ranging from 50 to 333 $\mu$m.

The chopped tapes preferably have lengths of from 10—30 mm. In this range the chopped tapes are more easily mixed into the aqueous matrix e.g. into a cement slurry. Because the chopped tapes have distinct edges and are not ragard, they are much easier to handle than discrete groups of interconnected fibres produced by breaking down a mechanically fibrillated sheet of film or tape.

The invention also provides a method of reinforcing water-hardenable masses which comprises distributed throughout the water-hardenable mass a fibrous reinforcement material of the present invention and hardening the water-hardenable mass.

The fibrous reinforcement material may be incorporated in and distributed throughout the water-hardenable mass such as a cement slurry or concrete mix in any convenient manner. When the reinforcement material is produced from narrow tapes it can be produced and fed into the mix concurrently by chopping continuous fibrillated tape and feeding the chopped tape directly into the mix.

The chopping of continuous fibrillated tape and blowing these discontinuous tapes into a jet of "atomised" cement slurry is another technique for distributing such fibres in the cement slurry in the production of flat sheets or shaped articles. By the use of such a spray technique, it is possible to omit intermediate mixing or stirring processes. When the tapes have a length longer than the fibrillation slit length cement slurry penetration of the film by the cement slurry is enhanced, especially when the fibre surface is hydrophillic, thereby improving mechanical keying.

The invention also includes water-hardened masses containing, distributed throughout the mass a fibrous reinforcement material of the invention.

The invention will be further illustrated by reference to the attached drawings, in which:

Fig. 1 is a graph showing a plot of deflection against flexural stress for a reinforced disc in which the incorporated cut tape has a width of 1.5 mm, a length of 20 mm and was incorporated in the reinforced disc at a concentration of 3% w/w.

Fig. 2 is a graph showing a plot of ultimate post-crack flexural strength derived from curves such as Fig. 1 against concentration of fibrous reinforcement material in respect of fibrillated tape of 1.5 mm width and 20 mm cut length.

Fig. 3 is a graph showing a flat tape cut length against the concentration at the ultimate flexural strength derived from curves such as Fig. 2.

Fig. 4 is a graph showing the relationship of length of cut tape to width of cut tape for a given concentration.

Fig. 5 is a graph showing the effect of fibrillation on the ultimate post-crack flexural strength.

Fig. 6 is a graph showing the effect of Youngs Modulus on the post-crack flexural strength,

and also by reference to the following Examples:

### Example 1
Method of Fibrillated Tape Production
1.1. Film was extruded through a slit die:

Polymer — Polypropylene MFI 5.5 90%
Polyethylene MFI 1.5 10%
(high density)

to give film thickness of 420 $\mu$m at 3 m/min cast onto a polished roller at 60°C.

Undrawn film was then slit into tapes of the required width.

The tapes were stretched in hot air oven at 200°C, with stretched speed 52.5 m/min (i.e. 17.5 draw ratio) to give thickness of 100 $\mu$m.

Fibrillation was effected with a pin roller of 1.6 pins/mm width in rows with spacing of 10 mm between consecutive rows by rotating the roller at a surface speed 2.4 × film speed. Penetration of pins into the film was adjusted to give slit lengths of 10 mm.

1.2. Using a blown film technique:

Polymer — Polypropylene MFI 1.5 90%
Polyethylene MFI 1.5 10%
(high density)

to give film thickness 150 $\mu$m at 10 m/min. Cooling was by air at ambient temperature.

Undrawn film was slit into tapes and stretched with a draw ratio of 17.5. Fibrillation was effected as in 1.1 above.

1.3. Tapes of widths 0.5, 1.5, 2.5 and 10 mm were prepared using the method 1.2 above to produce a 35 micron thickness fibrillated film. Each width was then cut to provide samples of cut tape having cut lengths of 6, 12, 20, 26, 35, 70 and 100 mm respectively.

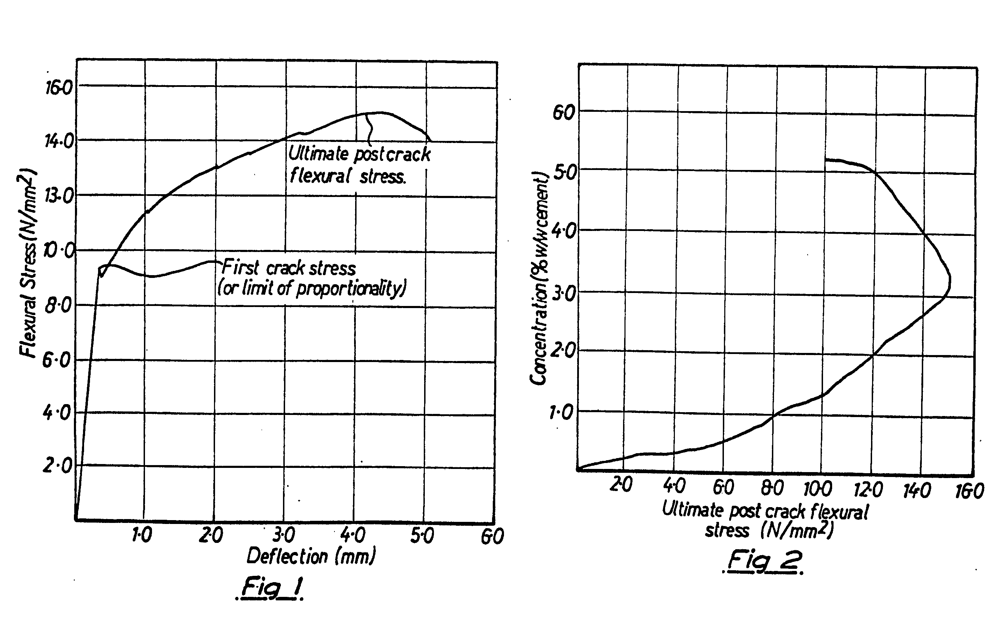

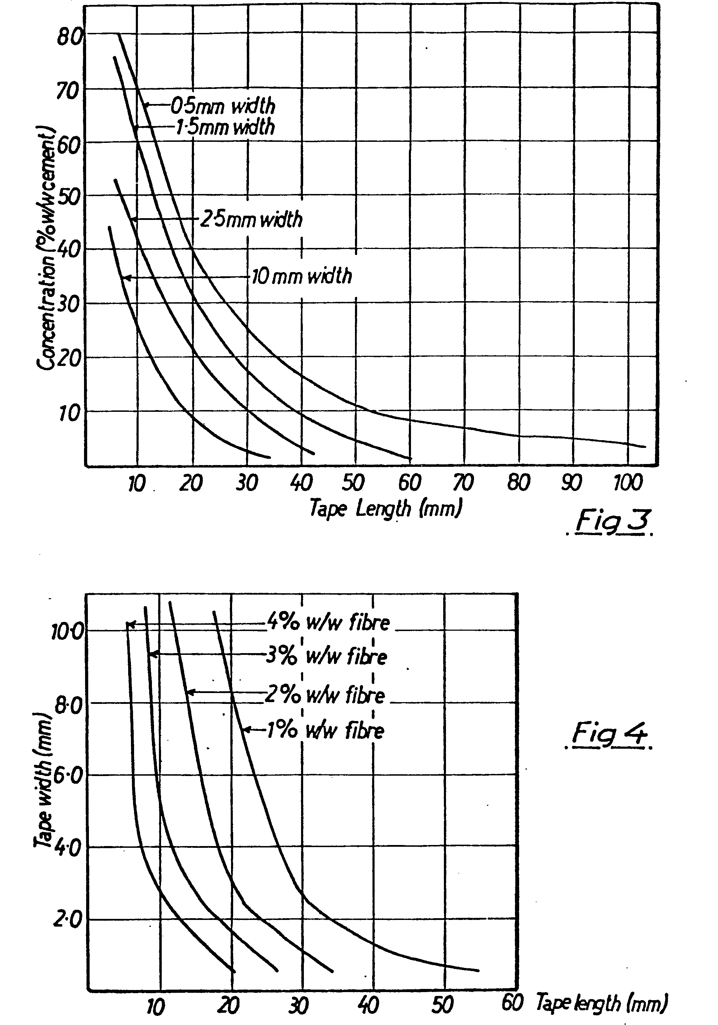

1.4. A cement slurry was prepared by mixing of ordinary portland cement powder with water in the proportion 1000 g cement to 400 cm$^3$ water in a Hobard A200 food mixer for 5 minutes. Using this slurry and the cut tape samples produced in 1.3 above a series of mixtures of cut tape and slurry were prepared containing 1%, 2%, 3%, 4% etc. by weight of each sample of cut tape, and test discs were prepared from each such mixture by pressing 300 g samples of each tape/slurry mixture in a cylindrical disc mold (diameter 120 mm). Water and some cement were pressed out to give a pressed weight of 250 g. The pressed discs were cured under water for 7 days and then the discs, or beams cut from the discs were tested in a three point bending (span 90 mm, for thickness 10 mm depending on specimen). The ultimate post-crack flexural stress was determined at each concentration (see Fig. 1 of the accompanying drawings) and plotted against concentration (see Fig. 2 of the accompanying drawings) to give the limit of the rate of increase in post-crack flexural strength for each cut length sample. The concentration at which the limit occurred was then plotted against cut length for each series of samples corresponding to a single width of tape to produce the curves shown in Fig. 3 of the accompanying drawings.

In the graphs of Fig. 3, for each curve the area under the curve defines the parameters of length and concentration which will provide an increase in post-crack flexural strength for an increase in concentration. The area above the curve defines the values of length and concentration at which a rapid decrease in post-crack flexural strength occurs with increase in concentration from any given point on the curve.

The relationship between width and length for a given concentration is shown in Fig. 4 so the accompanying drawings for four concentrations of 1%, 2%, 3%, and 4% wt/wt. In each of the Figs. 3 and 4 the limiting factor is the tendency of the tapes to "ball" which prevents even distribution and therefore lowers flexural strength. Thus in Figs. 3 and 4 the curves represent the point beyond which the balling effect becomes over-riding in its effect.

When the tapes are very short e.g. equal to or less than about 6 mm the post-crack flexural stress do not exceed the first crack stress (illustrated in Fig. 1) and do not provide the desired reinforcement in the water hardenable mass.

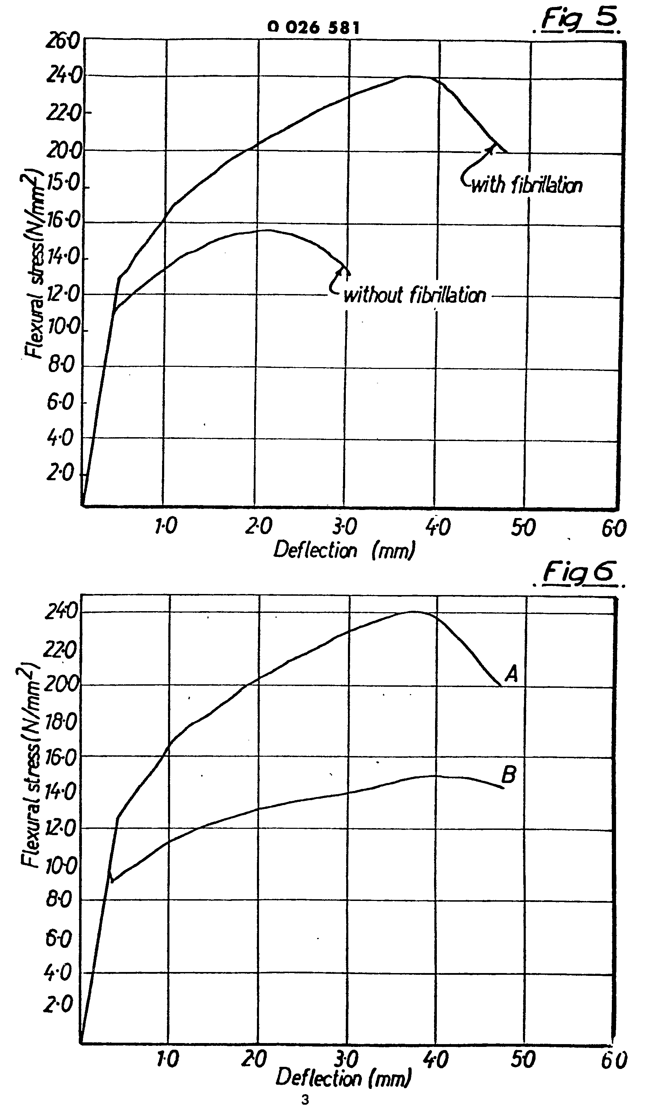

1.5. Tapes having a width of 1.5 mm and a length of 20 mm were prepared as in 1.2, and 1.3 above. A second sample was prepared but without fibrillation. Test discs were then produced as in 1.4 for both samples with a concentration of 3% wt/wt and a three point bending test carried out in the samples. The result is shown in Fig. 5 of the accompanying drawings. It is seen that the ultimate post-crack flexural strength was much greater for the fibrillated tape than for the unfibrillated tape.

1.6 A film was blown from 100% MFI 1.5 polypropylene and processed as in 1.2 except that the fibrillation roller speed was increased by 30% and the depth of penetration of pins into the film was adjusted to give a slit length of 15—20 mm. The extruder output was adjusted to give 35 $\mu$m stretched film thickness. The resulting fibrillated tape was much more hairy possibly due to the substitution of the homopolymer for the blend used in 1.2 but certainly to the increase in roller speed and pin penetration.

1.7. Hairy fibres were also produced by incorporation of particles of, for example, cement (1% OPC on weight of polymer) in the polymer of 1.2. For the subsequent mixing of the chopped tapes in the cement, similar characteristics for variation of tape width as in 1.4 were found. This fibre is less hairy than in 1.6 but has good "workability".

1.8. Tape Young's modulus was varied by modification of processing conditions. A tape was produced using the cast film route of 1.1. A tape of 100 $\mu$m film thickness was tested:

20 cm test length

100%/min rate of extension (Instron Model 1026)

Young's (tangent) modulus at 1% strain = $8.5 \times 10^3$ N/mm² (curve B of Fig. 6)

The trial was repeated for a chill cast roller of 90°C and the draw ratio of 28 was achieved (84 m/in), with extruder output adjusted to give 100 $\mu$m stretched film.

A tape was tested:

20 cm test length

100%/min rate of extension (Instrone Model 1026)

Young's (tangent) modulus of 1% strain = $14.6 \times 10^3$ N/mm² (curve A of Fig. 6)

Note that for a tape produced by the method of 1.1 for the chill cast route and with draw ratio of 8.0, a typical value of the Young's tangent modulus at 1.0% strain is $4.0 \times 10^3$ N/mm². Preferably the modulus should be more than $8 \times 10^3$ N/mm².

1.9. A series of film produced by the method of 1.1 except that the fibrillation roller speed relative to the film was progressively increased while maintaining pin penetration constant. The slit lengths produced were was follows:

| Fibrillation Roller Speed (relative to film speed) | Slit Length mm (mean value) |
|---|---|
| 2.4× | 10 |
| 2.7× | 10—15 |
| 3.1× | 15—20 |
| 3.4× | 15—20 |

The series was repeated using a pin penetration increased by 50% whereupon the slit lengths produced were as follows:

| | |
|---|---|
| 2.4 | 15—20 |
| 2.7 | 20—25 |
| 3.1 | 25—30 |
| 3.4 | 25—30 |

Test samples of the tapes produced were made and a similar series of curves produced as in 1.4. It was found that as the slit length increased the tendency to "ball" also increased. This was in part due to the increased "hairyness" of the tapes at higher fibrillation ratios and deeper pin penetration. When the slit length exceeded cut length the effect was to reduce the maximum concentration possible before "balling" became excessive. The cases where slit length exceeded cut length correspond to embodiment 1 as hereinbefore described — i.e. where discrete groups of interconnected fibres are produced in which substantially all of the fibres have lengths equal to or less than the slit length. Where the slit length was less than cut length the samples corresponded to the second embodiment hereinbefore described.

1.10. Tapes of 1.5 mm width and 20 mm length were prepared by the method of 1.2 and mixed with a cement slurry as in 1.3. A second sample was prepared in the manner of 1.6 and a slurry produced. A third sample was produced as in 1.7 and again mixed with a cement slurry. A fourth sample produced as in 1.2 but with 12 mm length was produced and mixed with a slurry of cement and water. In each case the mixing with cement/water slurry was carried out as in 1.4 using 3% wt/wt fibre. 300 g of each mixed sample were placed in turn on a scale pan the mixture was then picked up from the pan with one hand. The weight of slurry mixture left in the pan is a measure of the workability of the reinforcement material, i.e. the ability of the fibres or tapes to pick up and carry with them some of the cement slurry. The residues were as follows:—

| | |
|---|---|
| Sample 1 | 50 g |
| Sample 2 | 20 g |
| Sample 3 | 30 g |
| Sample 4 | 80 g |

1.11. Fibrillated tapes of 1.5 mm width, 35 $\mu$m thickness, 26 mm length were produced as in 1.2 but with an additional treatment with an hydrophillic wetting agent based on lauric fatty acid (0.5% solids as determined by methyl alcohol extraction technique).

It was found that such tapes were wetted out much more easily in the cement slurry. Close inspection revealed that cement particles penetrated more readily into the interstices of the tape, i.e. into the slits.

1.12. Tapes with improved chemical bond and/or improved hydrophillic surface properties were prepared by mixing additives with the polymer before extrusion. The bond and wetting out was tested by embedding to a depth of 20 mm lengths of unfibrillated tapes in cement test cubes. Pull-out tests were carried out after 7 days of curing cement paste (0.4 water/cement ratio employed).

The polymer and additives were processed as described in example 1.2, to give approximately 35 micron film after stretching.

Samples were prepared as follows:

REF. A — control, without additives

REF. B — with 0.6% silane (methacryloxypropyltrimethoxy type)

REF. C — with 2% silicon dioxide particles (Luf ×40 — B.A.S.F.)

REF. D — with 1% ordinary portland cement

REF. E — with 5% styrene acrylonitrile copolymer (Tyril from Dow Chemicals)

REF. F — with 1% ordinary portland cement and 0.6% silane (as REF. B type).

Pull out tests were carried out with (w) and without (w/o) a surfactant surface treatment (1) (phosphate ester type) which assists wetting out of the tape.

| Ref. | Draw Ratio | Denier | Ultimate Tensile Stress of Tape (not embedded) $(N/mm^2)$ | Tensile Stress for Onset of Slippage in Cement* $(N/mm^2)$ Surfactant[1] | | Tape Width (mm) | Critical Bond Stress Between Tape and Cement $(N/mm^2)$ Surfactant[1] | |
|---|---|---|---|---|---|---|---|---|
| | | | | w/o | w | | w/o | w |
| A | 18 | 337 | 772 | 219 | 358 | 1.2 | 0.19 | 0.31 |
| B | 18 | 353 | 721 | 275 | 342 | 1.2 | 0.25 | 0.31 |
| C | 8 | 554 | 525 | 262 | 353 | 1.8 | 0.24 | 0.32 |
| D | 8 | 469 | 487 | 393 | 420 | 1.8 | 0.32 | 0.34 |
| E | 18 | 462 | 580 | 419 | 484 | 1.2 | 0.50 | 0.58 |
| F | 18 | 392 | 622 | 322 | 566 | 1.2 | 0.33 | 0.57 |

* 20 cm exposed tape length.
Cross-head on Instron 1026 which moves at 20 cm/min.
Critical bond stress values (load for onset of slippage per unit surface area of polypropylene in contact with the cement) illustrate how the degree of wetting out and mechanical and/or chemical bond between the polypropylene and the cement matrix can be improved.

## Claims

1. A fibrous reinforcement material which comprises discrete groups of interconnected fibres produced by breaking up a network of fibres formed by cutting or slitting an oriented film of an alkylene polymer and/or copolymer by rows of pins or cutting edges mounted on a rotating drum characterised in that substantially all the individual fibres constituting the discrete groups have a length equal to or less than the length of the slits produced in the oriented film by the mechanical fibrillation process.

2. A fibrous reinforcement material as claimed in claim 1, characterised in that the film before orientation is in the form of one or more tapes.

3. A fibrous reinforcement material as claimed in claim 2 characterised in that the tapes are extruded as such.

4. A fibrous reinforcement material which comprises discrete groups of interconnected fibres produced by breaking up a network of fibres formed by cutting or slitting an oriented film or tape of an alkylene polymer and/or copolymer by rows of pins or cutting edges mounted on a rotating drum characterised in that the length of substantially all the fibres constituting each such group is not more than 100 mm and for a given width of film or tape is such as to provide post-crack flexural strength in a water-hardened mass in which such groups have been evenly distributed before the mass is hardened.

5. A fibrous reinforcement material as claimed in claim 4, which comprises cut or chopped pieces of mechanically fibrillated oriented film formed from an alkylene polymer and/or copolymer, characterised in that the width of the film measured after orientation but before fibrillation being from 0.5 mm to 10 mm and the lengths of substantially all of the cut or chopped pieces being 100 mm or less.

6. A fibrous reinforcement material as claimed in claim 5, characterised in that the lengths of substantially all the cut or chopped pieces does not exceed 35 mm.

7. A fibrous reinforcement material as claimed in claim 6 characterised in that the width of substantially all the cut or chopped pieces is substantially 0.5 mm and the lengths thereof are from 20 mm to 26 mm.

8. A fibrous reinforcement material as claimed in claim 6 characterised in that the width of substantially all the cut or chopped pieces is substantially 1.5 mm and the lengths thereof are from 15 mm to 20 mm.

9. A fibrous reinforcement material as claimed in claim 6 characterised in that the width of substantially all the cut or chopped pieces is substantially 10 mm and the lengths thereof are from 6 mm to 12 mm.

10. A fibrous reinforcement material as claimed in any of claims 1 to 9, characterised in that the film or tape has a thickness of from 10 to 100 $\mu$m.

11. A fibrous reinforcement material as claimed in claim 10, characterised in that the film or tape has a thickness of from 25 to 40 $\mu$m.

12. A fibrous reinforcement material as claimed in any of claims 1 to 11, characterised in that the alkylene polymer and/or copolymer is a propylene polymer and/or copolymer.

13. A fibrous reinforcement material as claimed in any of the preceding claims, characterised in that the film or tape is produced from a polymer and/or copolymer melt which contains inorganic particles compatible with the polymer and/or copolymer.

14. A fibrous reinforcement material as claimed in claim 13, characterised in that the inorganic particles are particles of Portland cement, chalk, silica (either precipitated or aerogel type), alumina, magnesia, or other naturally occurring oxide or carbonate.

15. A fibrous reinforcement material as claimed in any of claims 1 to 12, characterised in that the film or tape is produced from a polymer and/or copolymer melt which contains organic coupling or bonding agents.

16. A fibrous reinforcement material as claimed in claim 15 characterised in that the organic coupling or bonding agent is an ethyl polysilicate, a methacryloxypropyltrimethoxysilane, a silicone-glycol copolymer, a polyvinylalcohol, an organic acid or anhydride or a styrene-acrylonitrile copolymer.

17. A fibrous reinforcement material as claimed in claim 16 characterised in that the organic acid or anhydride is phthalic anhydride or oleic acid.

18. A fibrous reinforcement material as claimed in any of the preceding claims characterised in that a surfactant is disposed on the surface of the fibres.

19. A fibrous reinforcement material as claimed in claim 18 characterised in that the surfactant is coated onto the surface of the fibres after fibrillation of the film or tape but before the fibrillated film or tape is broken up into discrete groups of interconnected fibres.

20. A fibrous reinforcement material as claimed in any of the previous claims, characterised in that the fibrillated film or tape has a Youngs Modulus greater than $4 \times 10^3$ N/mm$^2$.

21. A fibrous reinforcement material as claimed in claim 20, characterised in that the fibrillated film or tape has a Youngs Modulus of greater than $8 \times 10^3$ N/mm$^2$.

22. A method of reinforcing a water-hardenable mass by incorporating therein a fibrous reinforcement material comprised of discrete groups of interconnected fibres and thereafter hardening the water hardenable mass characterised in that the reinforcement material incorporated in the water hardenable mass is a reinforcement material as claimed in any of claims 1 to 21.

23. A method of reinforcing a water-hardenable mass by incorporating therein a fibrous reinforcement material in the form of discrete groups of interconnected fibres, characterised in that the water hardenable mass is formed into a slurry and projected in the form of a jet of atomised slurry into a mould, and feeding a fibrous reinforcement material as claimed in any of claims 1 to 21 into said atomised jet.

24. A method as claimed in claim 23, characterised in that the fibrous reinforcement material is formed by chopping continuous fibrillated tape into appropriate lengths and blowing the cut lengths into the jet of atomised slurry.

## Patentansprüche

1. Faseriges Verstärkungsmaterial, welches diskrete Gruppen von miteinander verbundenen Fasern enthält, die durch Aufbrechen eines Netzes von durch Schneiden oder Spalten eines orientierten Films aus einem Alkylenpolymer und/oder Copolymer durch an einer rotierenden Trommel angebrachten Reihen von Stiften oder Schneidkanten gebildeten Fasern hergestellt sind, dadurch gekennzeichnet, daß im wesentlichen alle einzelnen Fasern, welche die diskreten Gruppen bilden, eine Länge aufweisen, die gleich wie oder kleiner als die Länge der Spalte ist, die in dem orientierten Film durch den mechanischen Fibrillierungsvorgang hergestellt sind.

2. Faseriges Verstärkungsmaterial nach Anspruch 1, dadurch gekennzeichnet, daß der Film vor der Orientierung in Form von einem oder mehreren Streifen vorliegt.

3. Faseriges Verstärkungsmaterial nach Anspruch 2, dadurch gekennzeichnet, daß die Streifen als solche extrudiert sind.

4. Faseriges Verstärkungsmaterial, welches diskrete Gruppen von miteinander verbundenen Fasern enthält, die durch Aufbrechen eines Fasernetzwerkes von durch Schneiden oder Spalten eines orientierten Films oder Streifens aus einem Alkylenpolymer und/oder Copolymer durch an einer rotierenden Trommel angebrachte Reihen von Stiften oder Schneidkanten gebildeteten Fasern hergestellt sind, dadurch gekennzeichnet, daß die Länge von im wesentlichen allen Fasern, welche jede solche Gruppe bilden, höchstens 100 mm beträgt und für eine gegebene Breite eines Films oder Streifens derart ist, daß eine "Biegefestigkeit nach einem Riss" in einer wassergehärteten Masse, in welcher solche Gruppen gleichmäßig verteilt sind, bevor die Masse gehärtet wird, vorgesehen ist.

5. Faseriges Verstärkungsmaterial nach Anspruch 4, welches zerschnittene oder zerhackte Stücke eines mechanisch fibrillierten, aus einem Alkylenpolymer und/oder Copolymer gebildeten orientierten Films umfaßt, dadurch gekennzeichnet, daß die Breite des nach der Orientierung, jedoch vor dem Fibrillieren gemessenen Films von 0,5 mm bis 10 mm beträgt und die Längen von im wesentlichen allen zerschnittenen oder zerhackten Stücken 100 mm oder weniger sind.

6. Faseriges Verstärkungsmaterial nach Anspruch 5, dadurch gekennzeichnet, daß die Längen von im wesentlichen allen zerschnittenen oder zerhackten Stücken höchstens 35 mm betragen.

7. Faseriges Verstärkungsmaterial nach Anspruch 6, dadurch gekennzeichnet, daß die Breite von im wesentlichen allen zerschnittenen oder zerhackten Stücken im wesentlichen 0,5 mm ist und die Längen derselben 20 bis 26 mm betragen.

8. Faseriges Verstärkungsmaterial nach Anspruch 6, dadurch gekennzeichnet, daß die Breite von im wesentlichen allen zerschnittenen oder zerhackten Stücken im wesentlichen 1,5 mm ist und die Längen derselben 15 bis 20 mm betragen.

9. Faseriges Verstärkungsmaterial nach Anspruch 6, dadurch gekennzeichnet, daß die Breite von im wesentlichen allen zerschnittenen oder zerhackten Stücken im wesentlichen 10 mm ist und die Längen derselben 6 bis 12 mm betragen.

10. Faseriges Verstärkungsmaterial nach einem der Ansprüche 1 bis 9, dadurch gekennzeichnet, daß der Film oder Streifen eine Dicke von 10 bis 100 $\mu$m aufweist.

11. Faseriges Verstärkungsmaterial nach Anspruch 10, dadurch gekennzeichnet, daß der Film oder Streifen eine Dicke von 25 bis 40 $\mu$m aufweist.

12. Faseriges Verstärkungsmaterial nach einem der Ansprüche 1 bis 11, dadurch gekennzeichnet, daß das Alkylenpolymer und/oder Copolymer ein Propylenpolymer und/oder Copolymer ist.

13. Faseriges Verstärkungsmaterial nach einem der vorhergehenden Ansprüche, dadurch gekennzeichnet, daß der Film oder Streifen aus einem geschmolzenen Polymer und/oder Copolymer hergestellt ist, welches anorganische Teilchen enthält, die mit dem Polymer und/oder Copolymer verträglich sind.

14. Faseriges Verstärkungsmaterial nach Anspruch 13, dadurch gekennzeichnet, daß die anorganischen Teilchen Teilchen aus Portlandzement, Kreide, Silicagel (entweder gefällt oder vom Aerogeltyp), Aluminiumoxid, Magnesiumoxid oder aus einem anderen natürlich vorkommenden Oxid oder Carbonat sind.

15. Faseriges Verstärkungsmaterial nach einem der Ansprüche 1 bis 12, dadurch gekennzeichnet, daß der Film oder Streifen aus einem geschmolzenen Polymer und/oder Copolymer hergestellt ist, welches organische Kupplungsoder Bindemittel enthält.

16. Faseriges Verstärkungsmaterial nach Anspruch 15, dadurch gekennzeichnet, daß die organische Kupplungs-oder Bindemittel ein Äthylpolysilikat, ein Methacryloxypropyltrimethoxysilan, ein Siliconglycolcopolymer, ein Polyvinylalkohol, eine organische Säure oder ein organisches Anhydrid oder ein Styrolacrylnitrilcopolymer ist.

17. Faseriges Verstärkungsmaterial nach Anspruch 16, dadurch gekennzeichnet, daß die organische Säure oder das organische Anhydrid Phthalsäureanhydrid oder Ölsäure ist.

18. Faseriges Verstärkungsmaterial nach einem der vorhergehenden Ansprüche, dadurch gekennzeichnet, daß ein oberflächenaktives Mittel auf die Oberfläche der Fasern aufgebracht ist.

19. Faseriges Verstärkungsmaterial nach Anspruch 18, dadurch gekennzeichnet, daß das oberflächenaktive Mittel als Überzug auf die Oberfläche der Fasern nach dem Fibrillieren des Films oder Streifens, jedoch vor dem Aufbrechen des fibrillierten Films oder Streifens in diskrete Gruppen von miteinander verbundenen Fasern aufgebracht ist.

20. Faseriges Verstärkungsmaterial nach einem der vorhergehenden Ansprüche, dadurch gekennzeichnet, daß der fibrillierte Film oder Streifen einen Young-Modul von mehr als 4 N/mm² aufweist.

21. Faseriges Verstärkungsmaterial nach Anspruch 20, dadurch gekennzeichnet, daß der fibrillierte Film oder Streifen einen Young-Modul von mehr als 8 N/mm² aufweist.

22. Verfahren zum Verstärken einer wasserhärtbaren Masse durch Einverleiben eines faserigen Verstärkungsmaterials in dieselbe, welches diskrete Gruppen von miteinander verbundenen Fasern umfaßt, und hernach Härten der wasserhärtbaren Masse, dadurch gekennzeichnet, daß als in die wasserhärtbare Masse einverleibtes Verstärkungsmaterial ein Verstärkungsmaterial nach einem der Ansprüche 1 bis 21 eingesetzt wird.

23. Verfahren zum Verstärken einer wasserhärtbaren Masse durch Einverleiben eines faserigen Verstärkungsmaterials in dieselbe, in Form von diskreten Gruppen von miteinander verbundenen Fasern, dadurch gekennzeichnet, daß die wasserhärtbare Masse zu einem Schlamm geformt wird und in Form eines Strahles aus atomisiertem Schlamm in eine Form eingeführt wird und ein faseriges Verstärkungsmaterial nach einem der Ansprüche 1 bis 21 in den atomisierten Strahl eingeführt wird.

24. Verfahren nach Anspruch 23, dadurch gekennzeichnet, daß das faserige Verstärkungsmaterial durch Zerhacken eines kontinuierlichen, fibrillierten Streifens zu geeigneten Längen geformt wird und die zerschnittenen Längen in den Strahl aus atomisiertem Schlamm eingeblasen werden.

**Revendications**

1. Matériau de renforcement fibreux comprenant des groupes séparés de fibres interconnectées produites par rupture d'un réseau de fibres formé par coupe ou incision d'une pellicule orientée d'un polymère et/ou dun copolymère d'alkylène au moyen de rangées de broches ou d'arêtes tranchantes montées sur un tambour rotatif, matériau caractérisé en ce que la quasi totalité des fibres individuelles constituant les groupes séparés ont une longueur égale ou inférieure à la longueur des fentes formées dans la pellicule orientée par le procédé de fibrillation mécanique.

2. Matériau de renforcement fibreux selon la revendication 1, caractérisé en ce que, avant d'être orientée, la pellicule est sous la forme d'un ou de plusieurs rubans.

3. Matériau de renforcement selon la revendication 2, caractérisé en ce que les rubans sont extrudés tels quels.

4. Matériau de renforcement fibreux comprenant des groupes séparés des fibres interconnectées produites par rupture d'un réseau de fibres formé par coupe ou incision d'une pellicule ou d'un ruban orientés d'un polymère et/ou d'un copolymères d'alkylène au moyen de rangées de broches ou d'arêtes tranchantes montées sur un tambour rotatif, matériau caractérisé en ce que la longueur de la quasi totalité des fibres constituant chacun des groupes ne dépasse pas 100 mm, et, pour une largeur donnée de pellicule ou de ruban, cette longueur est choisie de manière à donner de la résistance en flexion après une fissuration à un produit durci à l'eau dans lequel ces groupes de fibres ont été uniformément répartis avant que le produit soit durci.

5. Matériau de renforcement fibreux selon la revendication 4, comprenant des morceaux coupés ou hachés d'une pellicule orientée qui a été fibrillée par voie mécanique, d'un polymère et/ou d'un copolymère d'alkylène, caractérisé en ce que la largeur de la pellicule, mesurée après son orientation mais avant la fibrillation, est de 0,5 à 10 mm, et en ce que les longueurs de la quasi totalité des morceaux coupés ou hachés ne dépassent pas 100 mm.

6. Matériau de renforcement selon la revendication 5, caractérisé en ce que les longueurs de la quasi totalité des morceaux coupés ou hachés ne dépassent pas 35 mm.

7. Matériau de renforcement selon la revendication 6, caractérisé en ce que la largeur de la quasi totalité des morceaux coupés ou hachés est sensiblement de 0,5 mm, et leurs longueurs sont de 20 à 26 mm.

8. Matériau de renforcement selon la revendication 6, caractérisé en ce que la largeur de la quasi totalité des morceaux coupés ou hachés est sensiblement de 1,5 mm, et les longueurs de ces morceaux sont de 15 à 20 mm.

9. Matériau de renforcement selon la revendication 6, caractérisé en ce que la largeur de la quasi totalité des morceaux coupés ou hachés est sensiblement de 10 mm, et les longueurs de ces morceaux sont de 6 à 12 mm.

10. Matériau de renforcement selon l'une quelconque des revendications 1 à 9, caractérisé en ce que la pellicule ou le ruban d'origine a une épaisseur de 10 à 100 $\mu$m.

11. Matériau de renforcement selon la revendication 10, caractérisé en ce que la pellicule ou le ruban d'origine a une épaisseur de 25 à 40 $\mu$m.

12. Matériau de renforcement selon l'une quelconque des revendications 1 à 11, caractérisé en ce que le polymère et/ou le copolymère d'alkylène est un polymère ou un copolymère de propylène.

13. Matériau de renforcement selon l'une quelconque des revendications précédentes, caractérisé en ce que la pellicule ou le ruban ont été obtenus à partir d'un polymère et/ou copolymère à l'état fondu contenant des particules des matières minérales compatibles avec ces polymères.

14. Matériau de renforcement selon la revendication 13, caractérisé en ce que les particules minérales sont des particules de ciment Portland, de calcaire, de silice (précipitée ou du type aérogel), d'alumine, de magnésie ou d'autres oxydes ou carbonates d'origine naturelle.

15. Matériau de renforcement selon l'une quelconque des revendications 1 à 12, caractérisé en ce que la pellicule ou le ruban ont été obtenus à partir d'un polymère et/ou d'un copolymère à l'état fondu contenant des agents organiques de combinaison ou de liaison.

16. Matériau de renforcement selon la revendication 15, caractérisé en ce que l'agent organique est un polysilicate d'éthyle, un méthacryloxy-propyltriméthoxy-silane, un copolymère silicone/glycol, un alcool polyvinylique, un acide ou un anhydride organique ou un copolymère de styrène et d'acrylonitrile.

17. Matériau de renforcement selon la revendication 16, caractérisé en ce que l'acide ou l'anhydride organique est l'anhydride phtalique ou l'acide oléique.

18. Matériau de renforcement selon l'une quelconque des revendications précédentes, caractérisé en ce que la surface des fibres porte un agent surfactif.

19. Matériau de renforcement selon la revendication 18, caractérisé en ce que le surfactif a été appliqué sur la surface des fibres après la fibrillation de la pellicule ou du ruban, mais avant que ceux-ci soient brisés en groupes séparés de fibres interconnectées.

20. Matériau de renforcement selon l'une quelconque des revendications précédentes, caractérisé en ce que la pellicule ou le ruban fibrillé a un module d'Young supérieur à 4 N/mm².

21. Matériau de renforcement selon la revendication 20, caractérisé en ce que la pellicule ou le ruban fibrillé a un module d'Young supérieur à 8 N/mm².

22. Procédé de renforcement d'un produit à prise hydraulique par incorporation dans ce produit d'un matériau de renforcement fibreux formé de groupes séparés de fibres interconnectées, puis durcissement à l'eau du produit, procédé caractérisé en ce que le matériau de renforcement incorporé dans le produit est un matériau selon l'une quelconque des revendications 1 à 21.

23. Procédé de renforcement d'un produit à prise hydraulique par incorporation dans ce produit d'un matériau de renforcement fibreux sous forme de groupes séparés des fibres interconnectées, procédé caractérisé en ce qu'avec le produit à prise hydraulique on forme une suspension qui est projetée en un jet atomisé dans un moule, jet dans lequel on introduit un matériau de renforcement fibreux selon l'une quelconque des revendications 1 à 21.

24. Procédé selon la revendication 23, caractérisé en ce que le matériau de renforcement fibreux est formé par coupe d'un ruban continu fibrillé à des longueurs appropriées, qui sont introduites par soufflage dans le jet de suspension atomisée.

Flexural Stress (N/mm²)

16·0

14·0

13·0

10·0

8·0

6·0

4·0

2·0

Ultimate post crack flexural stress.

First crack stress (or limit of proportionality)

1·0    2·0    3·0    4·0    5·0    6·0

Deflection (mm)

Fig_1

Concentration (% w/w cement)

6·0

5·0

4·0

3·0

2·0

1·0

2·0    4·0    6·0    8·0    10·0   12·0   14·0   16·0

Ultimate post crack flexural stress (N/mm²)

Fig 2

0 026 581

Concentration (%ow/wcement)

80
70
0·5mm width
1·5mm width
60
2·5mm width
50
40
10 mm width
30
20
10

10  20  30  40  50  60  70  80  90  100

Tape Length (mm)

Fig 3

Tape width (mm)

10·0
4% w/w fibre
3% w/w fibre
8·0
2% w/w fibre
6·0
1% w/w fibre

Fig 4

4·0
2·0

10  20  30  40  50  60  Tape length (mm)

2

0 026 581

Fig 5

*with fibrillation*

*without fibrillation*

Flexural stress(N/mm²)

Deflection (mm)

Fig 6

A

B

Flexural stress(N/mm²)

Deflection (mm)